Europäisches Patentamt

European Patent Office

Office européen des brevets

(11) Veröffentlichungsnummer: **0 204 234**
**B1**

(12) **EUROPÄISCHE PATENTSCHRIFT**

(45) Veröffentlichungstag der Patentschrift: 02.05.90

(51) Int. Cl.⁵: **C 08 G 63/68,** C 08 G 63/20, C 08 G 63/91, C 10 L 1/32

(21) Anmeldenummer: **86107077.9**

(22) Anmeldetag: **24.05.86**

(54) **Verwendung von Polyestern mit Sulfonsäuregruppen.**

(30) Priorität: **01.06.85 DE 3519678**

(43) Veröffentlichungstag der Anmeldung:
**10.12.86 Patentblatt 86/50**

(45) Bekanntmachung des Hinweises auf die Patenterteilung:
**02.05.90 Patentblatt 90/18**

(84) Benannte Vertragsstaaten:
**DE FR GB SE**

(56) Entgegenhaltungen:
**US-A-2 761 795**
**US-A-4 048 149**
**US-A-4 124 571**

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Anzinger, Hermann, Dr.**
**Jakob-Kneip-Strasse 146**
**D-4000 Düsseldorf (DE)**
Erfinder: **VON Rybinski, Wolfgang, Dr.**
**Johannes-Hesse-Strasse 31**
**D-4000 Düsseldorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft die Verwendung von Polyestern auf Basis von Dialkanolamiden langkettiger Monocarbonsäuren als Dihydroxykomponente und von sulfonsäuregruppenhaltigen Dicarbonsäuren als Dicarbonsäurekomponente als Dispergiermittel in wässrigen Kohlesuspensionen eingesetzt werden.

In vielen Bereichen der Technik besteht ein Bedürfnis, Feststoffe zu Flüssigprodukten zu konfektionieren, um sie durch Rohrleitungen zu pumpen und beliebig genau dosieren zu können. Ein oft beschrittener Lösungsweg ist die Herstellung von Suspensionen des Feststoffs in Lösungsmitteln und insbesondere in Wasser. Dabei wird ganz allgemein angestrebt, dünnflüssige, lagerstabile Feststoffsuspensionen mit hohem Festkörpergehalt herstellen zu können. Dies gilt insbesondere bei wässrigen Kohlesuspensionen, die einer Verbrennung zugeführt werden, wodurch sich ein hoher Gehalt an flüssiger Phase, also Wasser verbietet. Da Kohle-Wasser-Suspensionen ohne weitere Zusätze im allgemeinen oberhalb von etwa 50 Gewichtsprozent Kohle nicht mehr fließfähig sind, werden zur Herstellung hochkonzentrierter fließfähiger Kohlesuspensionen Dispergiermittel eingesetzt. Das gebräuchlichste Dispergiermittel ist hierbei Ligninsulfonate (vergleiche hierzu M. J. Schick und J. L. Villa in J. Am. Oil Chem. Soc., Vol. 60 (7) 1349 (1983)). Auch beim Einsatz von Ligninsulfonaten treten bei Kohlegehalten über 60 Gewichtsprozent Viskositätsprobleme in Abhängigkeit vom Kohletyp auf. Für schwer zu dispergierende Kohlearten sind daher Einsatzkonzentration an Ligninsulfonat von 1 Gewichtsprozent und mehr nötig. Es besteht daher ein Bedürfnis, Dispergatoren mit erhöhter Wirksamkeit zur Verfügung zu haben, insbesondere auch solche auf einer anderen chemischen Basis. Die neuen Dispergatoren sollen darüber hinaus auch mit den in Kohlesuspensionen üblichen Stabilisatoren wie Xanthan oder Guar verträglich sein.

Polyester mit Alkylseitenketten auf Basis von Dialkanolamiden langkettiger Carbonsäuren als Diolkomponente und von Dicarbonsäuren auf Basis Maleinsäure sind im Prinzip bereits bekannt. So beschreibt die nicht vorveröffentlichte deutsche Patentanmeldung 33 45 843.9 kammartige Polyester aus Fettsäurediethanolamiden mit 8 bis 24 C-Atomen und Alkylbernsteinsäuren mit 8 bis 22 C-Atomen im Alkylrest. Die kammartigen Polyester sind sehr hydrophobe Polymere, die sich in Öl lösen und als Stockpunkterniedriger oder Kristallisationsinhibitoren in Mineralöl geeignet sind.

Aus dem US—Patent 2,761,795 sind bereits Polyester mit Alkylseitenketten und Sulfonsäuregruppen bekannt. Es findet sich dort auch ein Hinweis, daß derartige Substanzen als emulgierende Stoffe zur jegliche Verwendung eingesetzt werden können. Über die spezielle Eignung zur Stabilisierung von Kohlesuspensionen kann der Fachmann jedoch aus diesem US—Patent nichts entnehmen.

Die Erfinder haben sich die Aufgabe gestellt, auf Basis von Dialkanolamiden langkettiger Carbonsäuren und von sulfogruppenhaltigen Dicarbonsäuren neue, wasserlösliche Polyester zu schaffen, die eine neue Rohstoffbasis für Dispergiermittel für Kohledispersionen darstellen. Dabei sollten insbesondere Dispergiermittel verwendet werden, die im Vergleich zu Ligninsulfonaten in geringeren Mengen wirksam sind und die die Schaffung nieder viskoser Kohlesuspensionen mit hohem Feststoffgehalt und geringem Dispergiermittelgehalt ermöglichen.

Gemäß der Erfindung werden Polyester mit Alkylseitenketten und Sulfonsäuregruppen verwendet, die aus

— Carbonsäuredialkanolamiden mit 8 bis 24 C-Atomen und bis zu 3 Doppelbindungen im Carbonsäurerest als Dihydroxykomponenten und

— Sulfodicarbonsäure mit 4 bis 8 C-Atomen als Dicarbonsäuren

— und gewünschtenfalls weitere Modifizierungsmittel aufgebaut sind.

Ein weiterer Gegenstand der Erfindung ist die Verwendung der erfindungsgemäßen sulfonsäuregruppenhaltigen Polyester als Dispergatoren mit viskositätssenkender Wirkung in wässrigen Kohlesuspensionen.

Den erfindungsgemäßen verwendeten Polyester mit Alkylseitenketten und Sulfonsäuregruppen leigen als Dihydroxyverbindungen Carbonsäuredialkanolamide zugrunde. Bevorzugte Carbonsäuredialkanolamide sind die Amide aus monofunktionellen d.h. einbasigen Carbonsäuren und Dialkanolaminen mit nicht mehr als 4 und insbesondere nicht mehr als 3 C-Atomen pro Alkanolrest. Unter den Carbonsäuredialkoholamiden sind wiederum solche bevorzugt, die sich von linearen d.h. unverzweigten aliphatischen Carbonsäuren ableiten. So sind beispielsweise die Dialkanolamide von Fettsäuren ein besonders bevorzugter Rohstoff für die erfindungsgemäß zu verwenden Polyester. In jedem Fall soll der Carbonsäureanteil der Carbonsäuredialkanolamide zwischen 8 und 24 C-Atomen aufweisen. Bevorzugt sind Carbonsäuren mit 10 bis 18 C-Atomen.

Die als Rohstoffe bevorzugten Fettsäuredialkanolamide können sich von beliebigen Fettsäuren mit 8 bis 24 C-Atomen ableiten. Fettsäuren sind die Verseifungsprodukte von natürlichen Triglyceriden, also von pflanzlichen, tierischen oder seetierischen Ölen. Zur Herstellung der erfindungsgemäßen Polyester können sowohl vorgereinigte d.h. destillierte oder fraktionierte Fettsäuren eingesetzt werden als auch Fettsäuregemische wie sie nach der Verseifung von Ölen vorliegen. Verwendet werden können Fettsäuren mit einem hohen Anteil an gesättigten wie auch solche mit teilweise oder überwiegend olefinisch ungesättigtem Charakter. Geeignete Dialkanolamide basieren daher auf den Fettsäuren Hexansäure, Octansäure, Decansäure, Dodecansäure, Tetradecansäure, Hexadecansäure, Octadecansäure, Eikosansäure, Dokosansäure, Tetrakosansäure und/oder auf den korrespondierenden ein- oder bis zu dreifach olefinisch ungesättigten Verbindungen wie sie in der Natur vorkommen.

Eine weitere geeignete Rohstoffklasse sind Dialkanolamide von linearen oder verzweigten Monocarbonsäuren, die durch katalytische Oligomerisierung von Olefinen, insbesondere Ethylen und nachfolgende Funktionalisierung oder durch Addition von CO an langkettige -Olefine gewonnen worden sind.

Die in den erfindungsgemäß verwendeten Produkten eingesetzten Carbonsäuredialkanolamide leiten sich von Dialkanolaminen ab, die im Alkanolteil 2 bis 4 C-Atome pro Alkanolrest ausweisen. Demzufolge sind die Carbonsäurediethanolamide und/oder die Carbonsäuredipropanolamide bevorzugt.

Rohstoffe für die Polyester können gewonnen werden in den natürlich vorkommenden Öle wie beispielsweise Kokosöl, Palmkernöl, Palmöl, Baumwollöl, Leinöl, Erdnußöl, Sojaöl, Sonnenblumenöl, Rüböl oder Fischöl als solche oder als Methylester mit Dialkanolaminen umgesetzt werden. In manchen Fällen ist es auch bevorzugt, die genannten Öle zunächst einer katalytischen Härtung d.h. der Hydrierung der Doppelbindungen zu unterziehen. Unter den genannten Fettsäuredialkanolamiden sind solche Produkte bevorzugt, die sich von Fettsäuren mit 10 bis 18 C-Atomen ableiten.

Aufgrund ihrer Herstellung erhalten Carbonsäuredialkanolamide üblicherweise als Nebenprodukte eine geringe Menge an Dialkanolaminestern. Die Menge der Ester kann spektroskopisch oder durch Titration von basischem Stickstoff bestimmt werden. Bei der Herstellung der Polyester mit Alkylseitenketten und Sulfonsäuregruppen führen die Alkanolaminester zu Störungen des regelmäßigen Aufbaus. Es ist daher bevorzugt, Carbonsäuredialkanolamide einzusetzen, die einen Gehalt an titrierbarem Aminstickstoff d.h. an Esterprodukten von weniger als 5 mol-%, vorzugsweise von weniger als 3 mol-% und insbesondere von weniger als 1 mol-% aufweisen.

Die Dicarbonsäurekomponente der Polyester mit Alkylseitenketten enthält vorzugsweise eine Sulfonsäuregruppe. Derartige Dicarbonsäuren mit Sulfonsäuregruppen können entweder als solche eingesetzt werden, oder sie können durch polymeranaloge Reaktion d.h. durch Anlagerung von Sulfit an olefinische Doppelbindungen hergestellt werden. Die Dicarbonsäurekomponente soll zwischen 4 und 8 C-Atomen aufweisen. Besonders geeignet ist die Sulfobernsteinsäure. Polyester mit Sulfobernsteinsäuresegmenten lassen sich durch Umsetzung von Polyestern auf Basis Maleinsäure mit Disulfit, so z.B. mit Natriumdisulfit (Na$_2$S$_2$O$_5$) herstellen. Weitere geeignete Sulfodicarbonsäuren lassen sich aus Fumarsäure, Itaconsäure oder auch aus Tetrahydrophthalsäure gewinnen. Im letztgenannten Fall entstehen Cyclohexansulfocarbonsäuren. Die Herstellung von Sulfodicarbonsäureestern aus ungesättigten Dicarbonsäureestern ist beschrieben in den US—Patentschriften 2.028.091, 2.166.141, 2.166.142, 2.166.143, 2.166.144 und 2.166.145. Die Polyester mit Alkylseitenketten können gewünschtenfalls weitere Modifizierungsmittel enthalten.

Als Modifizierungsmittel kommen übliche in Polyester gängige Diole, Dicarbonsäuren oder Hydroxycarbonsäuren in Frage. Geeignete Diole sind Glykole wie Ethylenglykol, Propylenglykol oder langkettige Glykole wie sie durch Ringöffnung epoxidierter α-Olefine herstellbar sind. Weiterhin können verzweigte Diole eingesetzt werden wie beispielsweise Neopentylglykol. Modifizierungsmittel sind weiterhin auch andere Dicarbonsäuren, so beispielsweise ungesättigte Dicarbonsäuren, die im Molekül vorhanden sind, wenn die Anlagerung von Sulfit nicht bis zum vollständigen Umsatz durchgeführt wird. Weiterhin können auch gesättigte oder aromatische Dicarbonsäuren eingesetzt werden, so beispielsweise Phthalsäure, Bernsteinsäure, Adipinsäure, Sebacinsäure oder auch aromatische Dicarbonsäuren wie die isomeren Phthalsäuren. Als Hydroxycarbonsäuren können eingesetzt werden Glykolsäure, Milchsäure, 3-Hydroxypropansäure, Hydroxybutansäuren, Hydroxypentansäuren oder Hydroxyhexansäuren. Die genannten Dicarbonsäuren können als solche oder auch als Anhydride zur Reaktion gebracht werden. Die Hydroxycarbonsäuren können als Ester oder auch als innere Ester d.h. als Lactone eingesetzt werden.

In jedem Fall ist die Menge an Modifizierungsmittel so zu wählen, daß 50 Gewichtsprozent, vorzugsweise 20 Gewichtsprozent und insbesondere 5 Gewichtsprozent nicht überstiegen werden.

Die erfindungsgemäß verwendeten Produkte weisen ein Zahlenmittel des Molekulargewichtes zwischen 500 und 15000 aus. Bevorzugt sind Produkte zwischen 1000 und 8000. Wie bei Polykondensaten üblich, hat der Fachmann es in der Hand, durch die Wahl der Stöchiometrie der Ausgangsverbindungen oder durch den Kondensationsgrad das Molekulargewicht zu beeinflussen. Wenngleich es im vorliegenden Fall bevorzugt sein kann, die Carbonsäuredialkanolamide und die ungesättigten Dicarbonsäuren (die anschließend polymeranalog zur Sulfonsäure umgesetzt werden können) in stöchiometrischen Mengen einzusetzen, so können doch die Molverhältnisse zwischen 2:1 und 1:2 variiert werden, wobei die Produkte um so kürzerkettig werden, je mehr das Molverhältnis von der Äquivalenz abweicht. Bei einem Überschuß an Carbonsäuredialkanolamiden entstehen dabei Produkte mit OH-Endgruppen, bei einem Dicarbonsäureüberschuß Produkte mit Carbonsäureendgruppen.

Zur Herstellung der Polyester mit Alkylseitenketten werden die Carbonsäuredialkanolamide nach einer bevorzugten Ausführungsform der Erfindung zunächst mit ungesättigten Dicarbonsäuren oder ihren reaktiven Derivaten wie Anhydriden oder Estern umgesetzt. Dabei ist es bevorzugt, in Gegenwart eines inerten Lösungsmittels zu arbeiten, welches mit Wasser ein Azeotrop bildet, durch das das Reaktionswasser entfernt wird. So kann die Veresterung in Gegenwart von Toluol oder vorzugsweise Xylol durchgeführt werden, dabei wird das Reaktionswasser mit dem Lösungsmittel abgetrennt. Zur Beschleunigung der Veresterungsreaktion können übliche Katalysatoren eingesetzt werden. Geeignete Katalysatoren sind Säuren, wie Toluolsulfonsäure, Oxide wie zum Beispiel Diantimontrioxid oder Zinnoxid, Acetate von Übergangsmetallen wie zum Beispiel Mangan- oder Zinkacetat oder Titansäureester. Besonders geeignete Verbindungen sind zinnorganische Verbindungen, insbesondere saure zinnorganische Verbindungen. Ja nach dem gewählten Katalysator wird dabei die Veresterungsreaktion zwischen 60° und dem Siedepunkt des Gemisches durchgeführt. Die so entstandenen ungesättigten Polyester werden dann in einer zweiten Reaktionsstufe wie nachfolgend beschrieben zu sulfonsäuregruppenhaltigen Polyestern umgesetzt.

Die als erste Stufe vorliegenden ungesättigten Polyester können auch lösungsmittelfrei hergestellt werden. Hierzu werden die Carbonsäuredialkanolamide und die ungesättigten Dicarbonsäuren oder deren reaktive Derivate, wie Anhydride oder Halbester auf Temperaturen zwischen 100 und 220°, vorzugsweise zwischen 170 und 210° erhitzt und das Reaktionswasser wird im Inertgasstrom ausgetragen.

Die als erste Reaktionsstufe erhaltenen ungesättigten Polyester werden in einer zweiten Reaktionsstufe mit wässrigen Alkalimetalldisulfitlösungen bei erhöhter Temperatur, vorzugsweise bei Temperaturen oberhalb von 60 oder oberhalb von 80° umgesetzt. Geeignete Alkalimetalldisulfitlösungen sind die Natrium-, Kalium-, Lithium- oder Ammoniumsalze der Formel

$$Me_2 S_2O_5$$

in der Me eines der vorgenannten Metallkationen bezeichnet.

Zur Herstellung von Kohlesuspensionen wird Steinkohle, beispielsweise solche mit einem Aschegehalt von 10% und einem Heizwert von 6500 bis 7000 kcal pro Kilogramm auf eine Teilchengröße kleiner 200 µm gemahlen und zu mehr als 50 Gewichtsprozent in einer 0,3 gewichtsprozentigen wässrigen Lösung der erfindungsgemäßen Polyester oder ihrer Salze, vorzugsweise Alkalimetallsalze suspendiert. Gewünschtenfalls können den so hergestellten Kohlesuspensionen auch noch Stabilisatoren, wie insbesondere wasserlösliche Polymere zugesetzt werden. Geeignete Stabilisatoren sind Hydroxypropylstärke, Hydroxyethylcellulose, Celluloseether mit quartärem Stickstoff, Xanthan, Guar, Carboxymethylhydroxypropylguar und dergleichen. Die Stabilisatoren werden in Mengen von 0,01 bis 2 Gewichtsprozent, vorzugsweise 0,1 bis 1 Gewichtsprozent eingesetzt. Kohlesuspensionen, die die erfindungsgemäßen Polyester in Mengen von 0,2 bis 1 Gewichtsprozent enthalten, weisen den Vorteil auf, daß sie auch bei einem Kohleanteil von über 50 und sogar über 60% noch pumpbar und durch Rohrleitungen förderbar sind. Um diesen Effekt mit Ligninsulfonat zu erzielen, müssen weitaus höhere, im allgemeinen dreifache Mengen an Ligninsulfonat eingesetzt werden.

Beispiele

Beispiel 1

705 g eines Fettsäurediethanolamids (Kettenlängenverteilung: ca. 70% $C_{12}$, ca. 30% $C_{14}$) und 220 g Maleinsäureanhydrid wurden in 600 ml Xylol gelöst und in einer Rührapparatur mit Wasserabscheider zum Rückfluß erhitzt. Das gebildete Reaktionswasser wurde abgetrennt. Nach Beendigung der Wasserabspaltung wurde das Schleppmittel im Vakuum gezogen. Zum zurückbleibenden Kondensationsprodukt (Säurezahl um 20) wurde bei 90°C unter Rühren eine Lösung von 205 g $Na_2S_2O_5$ in 1300 ml Wasser langsam zugetropft und schließlich 2 Stunden bei dieser Temperatur nachgerührt. Mit fortschreitender Reaktion wurde eine homogene Lösung gebildet. Das Reaktionsprodukt konnte als solches nach Verdünnen zur Herstellung von Kohlesuspensionen eingesetzt werden. Das mittlere Molekulargewicht $M_n$ betrug ungefähr 3500 (dampfdruckosmometrische Bestimmung).

Beispiel 2

Es wurde eine Kohlesuspension hergestellt aus einer Kohle mit Aschegehalt von 10%, dem Heizwert 6500 bis 7000 kcal pro Kilogramm und einer mittleren Teilchengröße von kleiner 200 µm (Proveniens UdSSR). Dazu wurde eine Lösung des erfindungsgemäßen Polyesters nach Beispiel 1 hergestellt und in dieser Kohle durch Rühren suspendiert. Die hergestellte Suspension enthielt 0,3 Gewichtsprozent Polyester und 63 Gewichtsprozent Kohle. Sie wurde in einem Rotationsviskosimeter (Firma Contraves) bei 25° in einem Schergeschwindigkeitsbereich bis 200 $s^{-1}$ auf ihr Fließverhalten hin untersucht. In dem für die Förderung in Rohrleitungen besonders wichtigen Bereich zwischen 50 und 100 $s^{-1}$ wurde beobachtet, daß die Viskosität von 1000 mPas nicht überstiegen wurde. Ein Vergleichsversuch mit Ligninsulfonat zeigte, daß gegenüber dieser Substanz die Viskosität im gesamten Meßbereich um etwa 10% niedriger lag, obwohl nur 30 Gewichtsprozent erfindungsgemäße Polyester, bezogen auf Ligninsulfonat, eingesetzt worden sind.

Patentansprüche

1. Verwendung von Polyestern mit Alkylseitenketten und Sulfonsäuregruppen, hergestellt aus
— Carbonsäuredialkanolamiden mit 8 bis 24 C-Atomen und bis zu 3 Doppelbindungen im Carbonsäurerest als Dihydroxykomponenten und
— Sulfodicarbonsäure mit 4 bis 8 C-Atomen als Dicarbonsäuren
— und gewünschtenfalls weitere Modifizierungsmittel
als Dispergiermittel in wäßrigen Kohlesuspensionen in Mengen von 0,1 bis 1,5 Gew.-%.

2. Ausführungsform nach Anspruch 1, dadurch gekennzeichnet, daß die Polyester als Carbonsäurerest der Carbonsäuredialkanolamide unverzweigte Carbonsäuren, insbesondere Fettsäuren, enthalten.

3. Ausführungsform nach den Ansprüchen 1 und 2, dadurch gekennzeichnet, daß die Polyester als Carbonsäurerest der Carbonsäuredialkanolamide Fettsäuren mit 10 bis 18 C-Atomen enthalten.

4. Ausführungsform nach den Ansprüchen 1 bis 3, dadurch gekennzeichnet, daß die Polyester als Carbonsäuredialkanolamide Carbonsäuredipropanolamide und/oder Carbonsäurediethanolamide enthalten.

5. Ausführungsform nach den Ansprüchen 1 bis 4, dadurch gekennzeichnet, daß die Polyester als Sulfodicarbonsäuren Sulfobernsteinsäuren und/oder Cyclohexansulfocarbonsäure enthalten.

**Revendications**

1. Utilisation de polyesters ayant des chaînes latérales alcoylées et des groupes acide sulfonique, obtenus à partir:
— de dialcanolamides d'acide carboxylique ayant de 8 à 24 atomes de carbone et jusqu'à 3 doubles liaisons dans le radical acide carboxylique, en tant que composants dihydroxylés et
— des acides sulfodicarboxyliques ayant de 4 à 8 atomes de carbone, en tant qu'acides discarboxyliques
— et si désiré d'autres agents de modification en tant qu'agents dispersants dans des suspensions aqueuses de charbon, en quantités allant de 0,1 à 1,5% en poids.

2. Mode d'exécution selon la revendication 1, caractérisé en ce que les polyesters contiennent comme reste d'acide carboxylique des dialcanolamides d'acide carboxylique, des acides carboxyliques non ramifiés, en particulier des acides gras.

3. Mode d'exécution selon les revendications 1 et 2, caractérisé en ce que les polyesters contiennent en tant que reste d'acide carboxylique, des dialcanolamides d'acide carboxylique, des acides gras ayant de 10 à 18 atomes de carbone.

4. Mode d'exécution selon les revendications 1 à 3, caractérisé en ce que les polyesters renferment en tant que dialcanolamide d'acide carboxylique, un dipropanolamide d'acide carboxylique et/ou un diéthanolamide d'acide carboxylique.

5. Mode d'exécution selon les revendications 1 à 4, caractérisé en ce que les polyesters renferment en tant qu'acide sulfonique dicarboxyliques, des acides sulfosucciniques et/ou de l'acide cyclohexylsulfocarboxylique.

**Claims**

1. The use of polyesters containing alkyl side chains and sulfonic acid groups prepared from
— carboxylic acid dialkanolamides containing 8 to 24 C atoms and up to 3 double bonds in the carboxylic acid part as dihydroxy components and
— $C_{8-24}$ sulfodicarboxylic acid as dicarboxylic acids and
— optionally, other modifying agents as dispersants in aqueous coal suspensions in quantities of from 0.1 to 1.5% by weight.

2. The use claimed in claim 1, characterized in that the polyesters contain unbranched carboxylic acids, particularly fatty acids, as the carboxylic acid component of the carboxylic acid dialkanolamides.

3. The use claimed in claims 1 and 2, characterized in that the polyesters contain $C_{10-18}$ fatty acids as the carboxylic acid component of the carboxylic acid dialkanolamides.

4. The use claimed in claims 1 to 3, characterized in that the polyesters contain carboxylic acid dipropanolamides and/or carboxylic acid diethanolamides as the carboxylic acid dialkanolamides.

5. The use claimed in claims 1 to 4, characterized in that the polyesters contain sulfosuccinic acid and/or cyclohexane sulfocarboxylic acid as the sulfodicarboxylic acids.